(19) **Europäisches Patentamt**

**European Patent Office**

**Office européen des brevets**

(11) **EP 0 504 589 B1**

(12) **EUROPÄISCHE PATENTSCHRIFT**

(45) Veröffentlichungstag und Bekanntmachung des Hinweises auf die Patenterteilung:
**01.05.1996 Patentblatt 1996/18**

(51) Int Cl.6: **H01Q 3/26**, H01Q 3/22, G01S 13/90, G01S 7/40, G01S 3/16

(21) Anmeldenummer: **92102487.3**

(22) Anmeldetag: **14.02.1992**

(54) **Verfahren zur Ansteuerung einer aktiven Antenne**

Method for controlling an active antenna

Procédé pour la commande d'une antenne active

(84) Benannte Vertragsstaaten:
**DE FR GB IT SE**

(30) Priorität: **20.03.1991 DE 4109067**

(43) Veröffentlichungstag der Anmeldung:
**23.09.1992 Patentblatt 1992/39**

(73) Patentinhaber: **DORNIER GMBH**
**D-88004 Friedrichshafen (DE)**

(72) Erfinder:
• **Völker, Michael, Dipl.-Phys.**
**W-7778 Markdorf (DE)**
• **Weiss, Stefan, Dipl.-Ing.**
**W-7990 Friedrichshafen (DE)**
• **Zahn, Rudolf, Dr.-Ing.**
**W-7778 Markdorf (DE)**

(56) Entgegenhaltungen:
**US-A- 4 258 363**    **US-A- 4 725 844**
**US-A- 4 965 603**

**Beschreibung**

Die Erfindung betrifft ein Verfahren zur Ansteuerung einer aktiven Antenne nach dem Oberbegriff des Anspruch 1.

Solche aktiven Antennen werden z.B. für SAR-Sensoren (Synthetic Aperture Radar) verwendet. Sie werden auf einem Flugkörper, z.B. einem Satelliten so montiert, daß ihre Hauptkeule senkrecht zur Flugrichtung seitlich einige Grad vom Nadirpunkt fort weist. Der Elevationswinkel beschreibt die Schwenkung um die Längsachse der Antenne in einer Ebene senkrecht zur Flugrichtung.

Der Azimutwinkel gibt Drehungen in der Ebene (Flugrichtung, Antennennormale) an.

Eine aktive Antenne besteht üblicherweise aus einer rechteckigen n · m Matrix einzelner aktiver Sende/Empfangs-Elemente. Durch geeignete Phasen- und Amplitudenbelegung der unabhängig angesteuerten Sende/Empfangs-Elemente läßt sich das Fernfeld der Gesamtantenne bei unveränderter Geometrie in weiten Grenzen modellieren. Daraus ergibt sich die Möglichkeit, die Richtung der Hauptsende- bzw. Empfangskeule auf elektronischem Weg zu ändern, während die Lage der mechanischen Antenne unverändert bleibt. Die in einer Zeile (entlang der Flugrichtung) angeordneten Sende/Empfangs-Elemente bilden eine sogenannte Elevationsgruppe, die in einer Spalte angeordneten Sende/Empfangselemente eine Azimutgruppe.

Durch eine geeignete Änderung der Phasenbelegung an den Sende/Empfangselementen der einzelnen Elevationsgruppen ergibt sich eine Schwenkung der Antennenkeule in Elevationsrichtung, entsprechend erfolgt eine Schwenkung in Azimutrichtung durch geeignete Änderung der Phasenbelegung an den Sende/Empfangselementen der einzelnen Azimutgruppen. Veränderliche Strahlcharakteristiken sind in vielen Fällen vorteilhaft. Zum einen lassen sich in kurzen aufeinanderfolgenden Meßintervallen verschiedene Gebiete auf dem Erdboden ausleuchten. Andererseits ist es für den Empfangsfall möglich, großflächige Antennen mit hohem Antennengewinn zu bauen und die Hauptkeule der Richtung, aus der das Echo des Sendepulses kommt, nachzuführen. Die Gesamtempfindlichkeit des Systems wächst, die Mikrowellen-Sendeleistung kann bei gleichen Anforderungen an den Abstand zwischen Nutz- und Rauschsignal gesenkt werden.

In bekannten Vorrichtungen wird zur Ansteuerung ein elektrisches Mikrowellensignal zentral erzeugt und mit der richtigen Phase und Amplitude zu den einzelnen Sende/Empfangselementen der Antenne geleitet. Dazu werden Koax- oder Hohlleiterbauteile verwendet. Diese Vorrichtungen besitzen einen mechanisch komplizierten Aufbau bei relativ hohem Gewicht. Außerdem ist eine individuelle Phasen- und Amplitudeneinstellung nur in der Nähe der einzelnen Sende/Empfangselemente möglich, was wiederum die Steuerungsmöglichkeiten einschränkt.

In der US 4,965,603 ist ein Verfahren zur Ansteuerung der Sende/Empfangselemente einer aktiven Antenne beschrieben, bei der aus der Strahlung zweier Laser ein Schwebungssignal erzeugt wird, das in Glasfasern zu den einzelnen Sende/Empfangs-Elementen geführt wird und dort in ein elektrisches Signal gewandelt wird. Die Frequenzen der beiden Laser werden nicht verändert. Die Phasenverteilung des Schwebungssignals erfolgt mit Hilfe eines Phasenmodulators.

In der US 4,583,096 wird ein Verfahren zur Ansteuerung der Sende/Empfangselemente einer aktiven Antenne beschrieben, bei der von modulierten optischen Generatoren (Laser) digitale optische Informationen zur Steuerung von Phasenstellglieder abgegeben werden, die direkt an den einzelnen Sende/Empfangselementen angebracht sind. Dabei werden die digitalen optischen Informationen über Lichtleitfasern transportiert. Damit die Phasenverschiebung ausschließlich eine Funktion der digitalen optischen Informationen ist, müssen die Längen der Lichtleitfasern für jedes Sende/Empfangselement identisch sein.

Aus der US 4,725,844 ist ein Verfahren zur Ansteuerung der Sende/Empfangselemente einer aktiven Antenne bekannt, bei der das Licht eines intensitätsmodulierten Lasers über ein Glas-Faser-Netzwerk mit integrierten Stern-Kopplern auf die einzelnen Sende/Empfangs-Einheiten verteilt wird. Phasendifferenzen werden durch Phasen-Stellglieder, die in die einzelnen Lichtwege geschaltet sind, erzeugt.

Zur Ansteuerung der Sende/Empfangselemente einer aktiven Antenne wird in "Koepf, G.A.: Optical Processor For Phased-Array Antenna Beam Formation; in: SPIE Vol. 477 Optical Technology for Microwave Applications (1984), Seiten 75 - 81 ein Laser verwendet, der zwei Strahlen unterschiedlicher Frequenz emittiert. Zur Erzielung einer definierten Amplituden- und Phasenverteilung wird der erste Laserstrahl mit Hilfe eines elektrooptischen Kristalls moduliert, durchläuft eine Fouriertransformationslinse und wird anschließend mit dem zweiten Laserstrahl überlagert. Diese Methode wird auch in der DE 38 27 589 A1 angewendet, wobei jedoch für jedes Antennendiagramm ein zusätzlicher Laser eingesetzt wird.

In Soref, R.A.: Voltage-Controlled Optical/RF Phase Shifter, in: Journal of Lightwave Technology, Vol. LT-3, Nr. 5, Oktober 1985; Seiten 992-998 wird eine weitere Methode zur Ansteuerung der Sende-/Empfangselemente einer aktiven Antenne beschrieben. Dazu wird Laserlicht unterschiedlicher Frequenz kohärent überlagert. Die gewünschte Phasenbelegung wird durch Stellglieder erzeugt.

Aufgabe der Erfindung ist es, ein Verfahren zur Ansteuerung einer aktiven Antenne zu schaffen, mit dem sowohl die Änderung der Sende/Empfangsfrequenz als auch die Strahlschwenkung schnell und hochflexibel durchgeführt werden kann.

Diese Aufgabe wird mit dem Verfahren nach Anspruch 1 gelöst. Ausgestaltungen der Erfindung sind Gegenstände von Unteransprüchen.

Die Antenne umfaßt eine Anzahl von Sende/Empfangselementen, die bevorzugt in Zeilen (Elevationsgruppen) und Spalten (Azimutgruppen) angeordnet sind. Die Richtung der Antennenkeulen ist abhängig von Amplituden- und Phasenbelegung an den einzelnen Sende/Empfangselementen.

Erfindungsgemäß wird zur Ansteuerung der einzelnen Sende/Empfangselemente das Licht einer ersten schmalbandigen, kohärenten Lichtquelle in n · m Lichtwege (n: Anzahl der Elevationsgruppen, m: Anzahl der Azimutgruppen) unterschiedlicher Länge aufgeteilt. Das Licht einer zweiten schmalbandigen, kohärenten Lichtquelle, wie die erste Lichtquelle bevorzugt ein Laser, wird in n · m Lichtwege gleicher oder unterschiedlicher Länge aufgeteilt. Jeder der n · m Lichtwege, die von Lichtquelle 1 bzw. 2 ausgehen, ist einem der n · m Sende/Empfangselemente zugeordnet (n · m Kanäle). Die Gesamtheit dieser Lichtwege bildet ein sogenanntes Verzögerungsnetzwerk. Die Kohärenzlänge des Lichtes muß ausreichend groß, verglichen mit den größten Laufzeitdifferenzen des Netzwerks, sein.

Jeweils das Licht auf einem Lichtweg, das von der ersten Lichtquelle ausgeht, wird mit Licht auf einem Lichtweg, das von der zweiten Lichtquelle ausgeht überlagert. Die (optischen) Frequenzen der beiden Lichtquellen sind so gegeneinander verschoben, daß die Differenzfrequenz gleich der für die Ansteuerung der Sende/Empfangselemente gewünschten Frequenz ist. Für Radaranwendung liegt sie im Mikrowellen- oder Millimeterwellenfrequenzbereich. Aus der Überlagerung erhält man jeweils ein Schwebungssignal. Die Schwebungsfrequenz ist gleich der Differenzfrequenz. Insgesamt erhält man n · m Schwebungssignale derselben Schwebungsfrequenz.

Über optoelektronische Wandler (im weiteren als O/E-Wandler bezeichnet), z.B. Photodetektoren, werden die n · m Schwebungssignale in elektrische Signale umgewandelt. Ein O/E- Wandler detektiert nur die Schwebungsfrequenz, nicht die optische Trägerfrequenz des Schwebungssignals. Die durch Durchlaufen der einzelnen Lichtwege erzeugte Phasenbeziehung der Schwebungsignale bleibt bei der optoelektronischen Wandlung erhalten.

Die elektrischen Signale, die nach der Wandlung weiter verstärkt werden können, werden an die einzelnen Sende/Empfangselemente der Antenne geführt, wobei jedem ein Sende/Empfangselement zugeordnet ist.

Bei vorgegebenen Längendifferenzen der Lichtwege kann durch Variation der Lichtfrequenzen Phase und Frequenz (uns zwar sowohl unabhängig voneinander als auch miteinander gekoppelt) der an den Sende/Empfangselementen anliegenden elektrischen Signale verändert werden, so daß die Antennenkeulen geformt und geschwenkt und auch die Sende/Empfangsfrequenz verändert werden. Entscheidend für das erfindungsgemäße Verfahren ist, daß nicht eine statische Phasenänderung (Phasenunterschiede nur aufgrund vorgegebener Längendifferenzen der Lichtwege) sondern eine dynamische Phasenänderung (Phasenänderung aufgrund einer Frequenzänderung bei vorgegebenen Längendifferenzen der Lichtwege) erzeugt wird.

Die Lichtwegdifferenzen werden im Hinblick auf eine möglichst hohe Empfindlichkeit der Phase gegenüber absoluten Lichtwegfrequenzänderungen gewählt. Die Werte für die Lichtwegdifferenzen liegen deshalb im Bereich von bevorzugt einigen Metern bis zu einzelnen Millimetern, und damit um Größenordnungen höher als die Wellenlängen der Lichtquellen.

Der besondere Vorteil der Erfindung ist, daß durch Veränderung nur einer Größe (einer der beiden Lichtquellenfrequenzen) sowohl Phase als auch Frequenz der an den Sende/Empfangselementen anliegenden Signale geändert werden können. Es wird somit eine schnelle und sehr flexible Steuerung erreicht.

Auf den Lichtwegen können weitere Stellglieder zur Regelung von Phase und Amplitude, z.B. über die Polarisationsrichtung, angeordnet sein.

Neben dem allgemeinen Fall der Ansteuerung einer Antenne mit n Elevations und m Azimutgruppen (m und n größer 1), kann das erfindungsgemäße Verfahren auch bei Antennen mit nur einer Elevationsgruppe (n=1) oder nur einer Azimutgruppe (m=1) angewendet werden. Eine Schwenkung der Antennenkeule ist dabei nur in einer Richtung möglich.

Ein weiter Spezialfall ist eine Antenne mit lediglich einem Sende/Empfangselement (n=1 und m=1). In diesem Fall ist zwar keine Keulenschwenkung mehr möglich, jedoch kann die Sende- und Empfangsfrequenz (Schwebungssignals) verändert werden.

In einer vorteilhaften Ausführungsform wird das Licht in Lichtleitfasern geführt. Das von den Lichtquellen ausgehende Licht wird dabei in Lichtleitfasernetzwerke eingespeist und durch optische Koppler, z.B. 2 · 2-Koppler und/oder Sternkoppler in die einzelnen Lichtwege verzweigt.

In einer weiteren Ausführung wird das Licht über freie Wegstrecken (Freiraumaufbauten) geführt. Die Aufteilung in die einzelnen Lichtwege erfolgt z.B. durch teildurchlässige Spiegel und/oder optische Gitter.

Zur Erzeugung des Schwebungssignals müssen ausreichend schmalbandige, regelbare Lichtquellen zur Verfügung stehen. Vorteilhaft können laserdiodengepumpte Nd:YAG Laser eingesetzt werden. Ihre optischen Resonatoren erlauben bei einer optischen Frequenz von $2,8 \cdot 10^{14}$ Hz mit Hilfe einer Regelung Linienbreiten von unter 1 Hz.

Aufgrund thermischer Fluktuationen im Millikelvinbereich verändert sich die Linienposition sehr schnell. Die Linienposition eines kommerziell erhältlichen Lasers z.B. verändert sich aufgrund der endlichen Genauigkeit der Thermalregelung mit etwa 1 MHz pro Minute. Es ist deshalb eine laufende äußere Regelung der Laserfrequenzen notwendig.

Aufgabe einer SAR-Antenne ist es, kurze, zentral erzeugte Mikrowellenimpulse wiederholt zu senden und das reflektierte Echo wieder zu empfangen. Während des Sendeimpulses wird die Frequenz linear mit der Zeit um eine bestimmte Bandbreite durchgestimmt (Chirpsignale). Mit dem erfindungsgemäßen Verfahren kann ein solches Chirpsignal auf rein optischem Weg ohne den bisher notwendigen aufwendigen elektronischen Aufbau erzeugt werden. Dazu wird die Frequenz einer oder beider Lichtquellen entsprechend verändert, wodurch die gewünschte Veränderung der Schwebungsfrequenz (Sendefrequenz) erreicht wird.

Das erfindungsgemäße Verfahren ist jedoch nicht auf Radaranwendungen beschränkt.

Durch externe Modulation eines der beiden Laser können mit einer nach dem erfindungsgemäßen Verfahren angesteuerten Antenne auch beliebige Informationen übertragen werden.

Das Verfahren ist im Sende- wie auch im Empfangsfall anwendbar:

Im Sendefall wird das an den einzelnen Sende/Empfangselementen mit definierter Phase und Amplitude anliegende Signal nach einer elektrischen Verstärkung direkt gesendet. Im Empfangsfall dient es in den Sende/Empfangselementen als LO-Referenz (Local Oscillator) zum kohärenten Phasenvergleich mit dem empfangenen Signal in Mischern.

Weitere Vorteile und Ausführungsformen der Erfindung werden mit Hilfe von Figuren erläutert.

Es zeigen:

Fig. 1      eine Darstellung der Phasenänderung eines Lichtsignals nach Durchlaufen unterschiedlicher Lichtwege,

Fig. 2      zwei mögliche Anordnungen zur Aufspaltung des von den Lichtquellen ausgehenden Lichts,

Fig. 3      Zusammenhang zwischen den Frequenzen der beiden Lichtquellen und der Schwenkung der Antennenkeule bzw. der Überlagerungsfrequenz,

Fig. 4      eine Vorrichtung zur Anwendung des erfindungsgemäßen Verfahrens unter Verwendung von Sternkopplern,

Fig. 5, 6   zwei weitere Vorrichtungen zur Anwendung des erfindungsgemäßen Verfahrens unter Verwendung von $2 \cdot 2$-Kopplern.

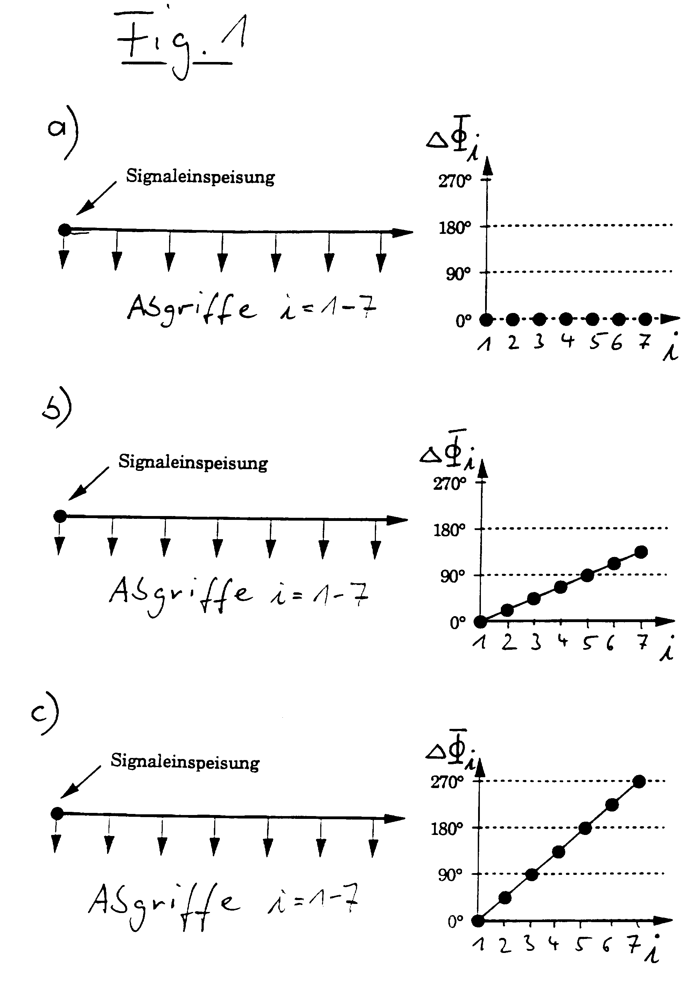

Fig. 1 zeigt den Effekt einer Frequenzänderung auf die Phasendifferenzen $\Delta \phi$ zwischen äquidistanten Abgriffen $i = 1$ bis 7 entlang eines Ausbreitungsmediums. Das optische Signal einer festen Frequenz $\nu$ wird auf der linken Seite eingespeist und pflanzt sich nach rechts fort. Für die zwischen den einzelnen Abgriffen liegenden Distanzen benötigt das Licht die Zeit $\tau$.

In Fig. 1a ist die Frequenz $\nu$ so eingestellt, daß an sämtlichen Abgriffen dieselbe Phase vorliegt. In nebenstehender Graphik sind die Phasendifferenzen $\Delta \phi_i$ zwischen Abgriff **i** und Abgriff **1** aufgetragen, die hier jeweils null sind. In Fig. 1b wurde die eingespeiste Frequenz gegenüber der Frequenz $\nu$ aus 1a um $1/(16 \cdot \tau)$ verschoben. Die daraus resultierenden Phasendifferenzen zwischen den einzelnen Abgriffen sind in der nebenstehenden Graphik dargestellt.

In Fig. 1c wurde die Frequenz gegenüber der Frequenz $\nu$ aus Fig. 1a) um $1/(8 \cdot \tau)$ verschoben. Die Phasendifferenzen zwischen den einzelnen Abgriffen erhöhen sich.

Allgemein gilt für die Phasendifferenz $\Delta \phi_i$ zwischen Abgriff **i** und Abgriff **1** einer solchen Phasenrampe:

$$\Delta\phi_i = \Delta\nu \cdot (i\text{-}1) \cdot \tau \cdot 2 \cdot \pi, \qquad (i = 1,2,3,...) \qquad \text{(Formel 1)},$$

wobei $\Delta \nu$ die Frequenzänderung des eingespeisten Lichts ist.

Die Steigung der Phasenrampe ($\Delta \phi_i$ aufgetragen über **i**) hängt von der Frequenzänderung $\Delta \nu$, nicht aber von der absoluten Frequenz $\nu$ ab. Bei Änderung der Frequenz um ganzzahlige Vielfache von $1/\tau$ ändert sich lediglich die Zahl der ganzen Perioden auf dem Abschnitt zwischen den Abgriffen, was sich nicht auf die Phasen an den Abgriffen auswirkt.

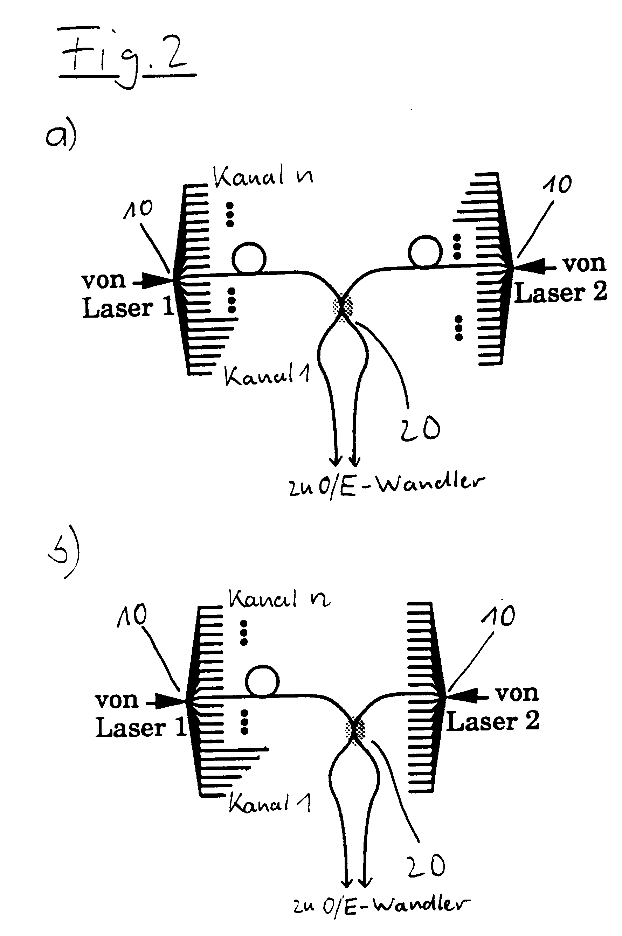

Fig. 2 zeigt zwei mögliche Anordnungen bei der Aufspaltung des von den zwei Lasern ausgehenden Lichtes.

Das von den Lasern mit den Frequenzen $\nu_1$ bzw. $\nu_2$ erzeugte Licht wird jeweils in mehrere Lichtwege (Kanal 1 bis n, mit n=Anzahl der Elevationsgruppen), aufgespalten. Das kann z.B. dadurch geschehen, daß ein Sternkoppler **10** das vom Laser kommende Licht in mehrere Lichtleiterfasern einkoppelt. Es sind jedoch auch Freiraumaufbauten möglich, bei denen das Licht über freie Wegstrecken geführt wird. In diesem Fall wird der Sternkoppler **10** durch halbdurchlässige Spiegel oder Gitter ersetzt. Jeweils eine Faser von Laser **1** und eine Faser von Laser **2** werden in einem optischen 2·2-Koppler **20** in zwei Ausgangsfasern gekoppelt, in denen sie interferieren. Die Frequenzen der beiden Laser sind eng benachbart, so daß ein Schwebungssignal der Frequenz l$\nu_1$ - $\nu_2$l oder des gewünschten Spektrums um die Frequenz l$\nu_1$ -$\nu_2$l entsteht.

Das Schwebungssignal wird zu einem hier nicht eingezeichneten O/E-Wandler geführt. Dort wird nur die Schwebungsfrequenz l$\nu_1$ - $\nu_2$l detektiert, so daß das optische Schwebungssignal in ein elektrisches Signal der Schwebungsfrequenz gewandelt wird, welches an das zugeordnete Sende/Empfangs-Element der Antenne geleitet wird. Beide Ausgänge des $2 \cdot 2$-Kopplers können verwendet werden um damit im Gegentakt betriebene O/E-Wandler zu beleuchten.

In Fig. 2a nimmt die Länge $l_{1,j}$ der Fasern, die von Laser **1** (der erste Index bezeichnet die Nummer des Lasers, **j** bezeichnet die Kanalnummer) ausgehen, jeweils von Faser zu Faser um einen konstanten Betrag zu, während die Länge $l_{2,j}$ der von Laser **2** ausgehenden Fasern jeweils um den gleichen Betrag von Faser zu Faser abnehmen. An den Endpunkten der von Laser **1** ausgehenden Fasern wird bei Vergrößerung der Laserfrequenz $\nu_1$ somit eine Phasenrampe mit zunehmender Steigung, an den Endpunkten der von Laser **2** ausgehenden Fasern bei Vergrößerung von $\nu_2$ eine Phasenrampe abnehmender Steigung erzeugt. Nach der Überlagerung ist im Schwebungssignal die Differenz der Phase der überlagerten Lichtsignale enthalten.

Eine solche Anordnung wird im folgenden als Anordnung vom Typ **A** bezeichnet.

In Fig. 2b nimmt die Länge $l_{1,j}$ der Fasern, die von Laser **1** ausgehen, wie schon in Fig. 2a jeweils um einen konstanten Betrag zu, der hier jedoch doppelt so groß ist als der in Fig. 2a. Die Länge $l_{2,j}$ der von Laser **2** ausgehenden Fasern ist konstant. Entsprechend erhält man an den Endpunkten der von Laser **1** ausgehenden Lichtwege eine Phasenrampe zunehmender Steigung, an den Endpunkten der von Laser **2** ausgehenden Lichtwege eine Phasenrampe mit verschwindender Steigung. Diese Anordnung wird als Typ **B** bezeichnet.

Für die Lichtweglängen $l_{l,j}$ gilt in beiden Anordnungen nach Fig. 2a, b:

$$(l_{1,j} - l_{2,j'}) - (l_{1,j+1} - l_{2,j+1}) = L_{el} \text{ , konstant für alle j=1 bis n,}$$

wobei $L_{el}$ in beiden Anordnungen gleich ist.

Anordnungen, bei denen $L_{el}$ abhängig von der Kanalnummer **j** ist, sind geeignet, neben dem Schwenken der Antennenkeule die Antennencharakteristik zu verändern.

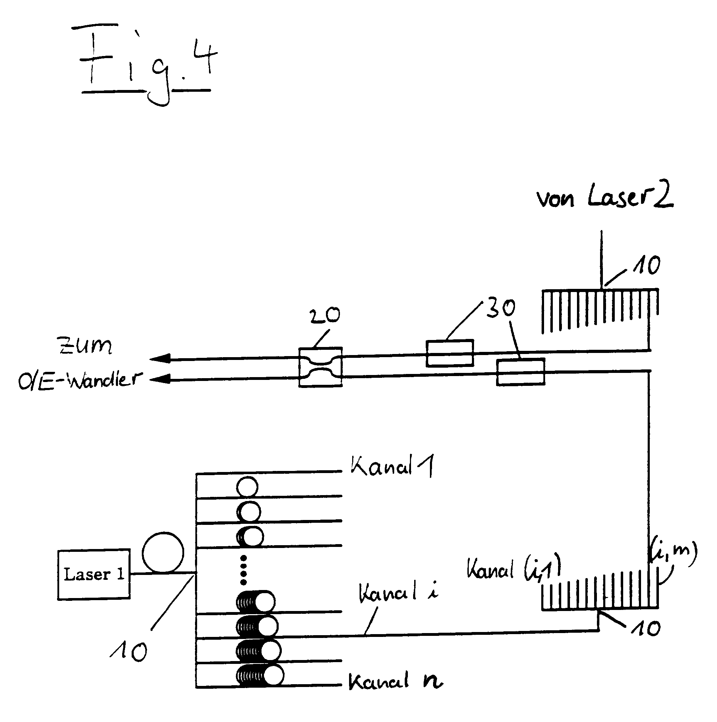

Aus Gründen der Übersichtlichkeit ist in Fig. 2 nur der eindimensionale Fall, also eine Anordnung zur Schwenkung in nur eine Richtung, hier der Elevationsrichtung, dargestellt. Deshalb sind die gezeichneten Lichtleitfasern (Kanal 1 - n), bzw. die entstehenden n Schwebungssignale den Sende/Empfangselementen der n Elevationsgruppen zugeordnet. Zusätzliches Schwenken in Azimutrichtung bedeutet eine zusätzliche Überlagerung eines weiteren Phasengangs über die m Azimutgruppen. Eine solche Anordnung wird in Fig. 4 beschrieben.

Für die Beschreibung werden für alle Kanäle die Faserstrecken vom 2 · 2-Koppler **20**, an der die Überlagerung beginnt, bis zum O/E-Wandler als identisch angenommen, so daß als Faserlänge in der oben gebrauchten Bedeutung jeweils die Strecke vom Sternkoppler **10** bis zum 2 · 2-Koppler **20** zu verstehen ist. Durch verschiedene Staffelung der Faserlängen vom 2 · 2Koppler zum O/E-Wandler ließen sich beide Typen **A, B** ineinander überführen.

Um die Laserfrequenzen regeln zu können, wird die Steigung der Phasenrampe gemessen. Elektrisch gemessen werden kann die Phasendifferenz des Überlagerungssignals aus weit auseinanderliegenden Kanälen. Geeignet ist ein interferometrischer Aufbau (z.B. Mach-Zehnder- oder Michelson-Interferometer), der unterschiedlich lange Zweige besitzt und nur vom Licht eines Lasers gespeist wird. Die Phasenausgangssignale einer Anzahl von Interferometern verschiedener Laufzeitdifferenzen sind geeignet, die absolute Lichtfrequenz für diese Anwendung eindeutig genug zu bestimmen. Für eine Interferometergruppe mit exponentiell ansteigenden Verzögerungsdifferenzen ergibt sich eine Polynomdarstellung der Frequenz (z.B. digital). Die Phasenmesungen der Interferometer dienen z.B. der Frequenzregelung der Laserfrequenz $\nu_1$ als Eingangssignal.

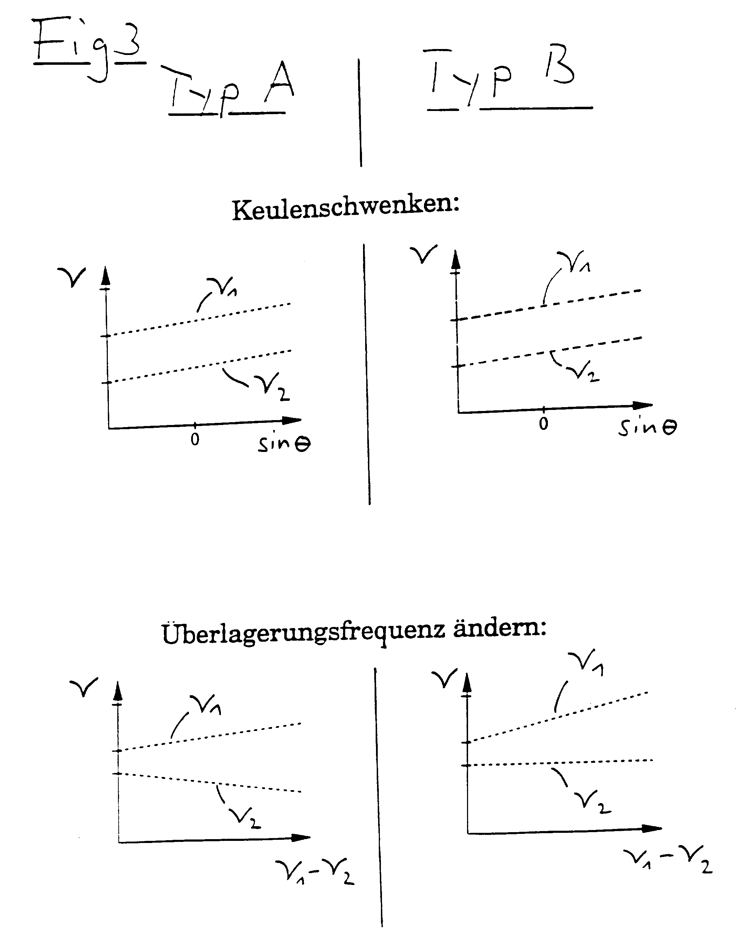

Fig. 3 zeigt qualitativ für beide Typen **A, B** den Zusammenhang zwischen den beiden Laserfrequenzen $\nu_1$, $\nu_2$ und dem Schwenkungswinkel $\theta$ der Antennenkeule bzw. der Änderung der Überlagerungsfrequenz (Schwebungsfrequenz) $|\nu_1 - \nu_2|$.

In den oberen beiden Darstellungen sind links für Typ **A** und rechts für Typ **B** die beiden Laserfrequenzen $\nu_1$, $\nu_2$ über dem Sinus des Schwenkungswinkels $\theta$ aufgetragen. Durch gleichsinnige Verschiebung der Frequenzen $\nu_1$, $\nu_2$ wird die Überlagerungsfrequenz $|\nu_1 - \nu_2|$ konstant gehalten und es wird nur die Antennenkeule geschwenkt.

In den unteren beiden Darstellungen sind links für Typ **A** und rechts für Typ **B** die beiden Laserfrequenzen $\nu_1$, $\nu_2$ über der Überlagerungsfrequenz $|\nu_1 - \nu_2|$ aufgetragen. Die Richtung der Antennenkeule wird konstant gehalten und es wird nur die Überlagerungsfrequenz $|\nu_1 - \nu_2|$ variiert (Chirpimpuls). Dazu müssen im Fall einer Anordnung nach Typ **A** die beiden Laserfrequenzen $\nu_1$, $\nu_2$ gegenläufig verstimmt werden. Bei Typ B bleibt eine ($\nu_2$) der beiden Laserfrequenzen konstant, die andere Laserfrequenz $\nu_1$ muß zur Erzeugung derselben Änderung der Überlagerungsfrequenz doppelt so stark verändert werden, als ein Laser bei Typ **A**.

Eine Anordnung nach Typ **A** erlaubt (bei begrenztem Verstellhub für die Laserfrequenzen) doppelt so große Änderungen der Sendefrequenz während der Dauer des Chirpimpulses als eine Anordnung nach Typ **B**, weil dazu beide Laser gegenläufig verstimmt werden (Typ **A**), wohingegen bei Typ **B** nur ein Laser verstimmt wird.

Fig. 4 zeigt eine Ausführungsform für den allgemeinen Fall der gleichzeitigen Schwenkung in Elevations- und Azimutrichtung mit Hilfe von Sternkopplern **10**.

Das Licht des Lasers **1** wird in einem ersten Sternkoppler **10** in einzelne, unterschiedlich lange Lichtleitfasern (Kanal **j** mit j = 1 bis n, n = Anzahl der Elevationsgruppen), die jeweils einer einzelnen Elevationsgruppe zugeordnet sind, eingekoppelt. Der Längenunterschied zwischen den einzelnen Fasern ist konstant. Die unterschiedlichen Längen sind durch die Anzahl der Schlaufen angedeutet. Für den Azimutschwenk wird das Licht jeder der Fasern nochmals auf die m Sende/Empfangselemente einer Elevationsgruppe aufgeteilt (Kanal (**j,k**) mit j = 1 bis n und k = 1 bis m, m = Anzahl der Azimutgruppen) wobei der Längenunterschied zwischen den einzelnen Fasern, gemessen vom Sternkoppler **10** der zweiten Aufteilung bis zur Überlagerung im 2 · 2-Koppler **20** ebenfalls konstant ist.

Das nur angedeutete Netzwerk zu Laser **2** kann entsprechend Typ **B** mit gleichlangen Lichtleitfasern oder entsprechend Typ **A** in der Länge in umgekehrter Reihenfolge gestaffelt sein.

Die gezeigt Anordnung kann auch mit Freiraumbaufbauten realisiert werden. An Stelle der Sternkoppler werden dann z.B. Gitter eingesetzt.

Für beide Typen **A,B** gilt folgende Beziehung zwischen den Lichtweglängen $l_{i,j,k}$ (Index **i** bezeichnet den Laser, von dem der Lichtweg ausgeht, **j** die Elevationsgruppe, **k** die Azimutgruppe, deren Sende/Empfangselementen der Lichtweg zugeordnet ist):

$$(l_{1,j,k} - l_{2,j,k}) - (l_{1,j+1,k} - l_{2,j+1,k}) = L_{el}, \text{ konstant für alle } j,k$$

$$(l_{1,j,k} - l_{2,j,k}) - (l_{1,j,k+1} - l_{2,j,k+1}) = L_{az}, \text{ konstant für alle } j,k.$$

Bevorzugt beträgt der Wert für $L_{el} \geq 1$ Meter, für $L_{az} \leq L_{el}/m$, wobei m (die Anzahl der Azimutgruppen) bevorzugt gleich 40 ist. Die Werte der Längendifferenzen $L_{el}$, $L_{az}$ liegen somit immer um Größenordnungen höher als die Wellenlängen der Lichtquellen (die Wellenlänge eines Nd:YAG-Laser beträgt etwa $10^{-6}$ m).

Kontinuierliche Schwenks in Elevation werden durch Variation der Lichtfrequenz um maximal $c/L_{el}$ ($c$ = Gruppengeschwindigkeit $\approx$ 200 MHz · m in Glas) realisiert. In Azimutrichtung wird durch Ändern der Frequenz in Schritten von $c/L_{el}$ geschwenkt. Dabei ändert sich der Schwenkwinkel in Elevationsrichtung nicht (siehe Erläuterungen zu Formel 1).

Der Grund für die unterschiedlichen Differenzlängen $L_{el}$, $L_{az}$ der Lichtwege für die Schwenkung in Elevations- und Azimutrichtung ergibt sich daraus, das bei üblichen SAR-Anwendungen der Elevationsschwenk gegenüber dem Azimutschwenk (große Änderung der optischen Frequenz) sehr schnell durchgeführt werden soll.

Vor der Überlagerung im 2 · 2-Koppler **20** werden einfache (langsame) optische Phasensteller **30** eingefügt, die dem Einstellen der optischen Phase und damit auch der Phase des überlagerten Signals zur Kompensation von Driften dienen.

Amplituden sind an beliebiger Stelle z.B. mit Hilfe von Mach-Zehnder-Interferometern oder Polarisationsstellgliedern einstellbar. Maximiert werden kann das genutzte Licht, sofern es schon bei der Aufteilung in verschiedene Zweige mit einer (einstellbaren) Amplituden-und Phasenbelegung versehen wird. Damit wird die ganze Lichtleistung genutzt.

Auch sind verschiedene feste Netzwerke mit individueller Amplituden- und Phasenbelegung, gespeist durch individuelle Laser, möglich.

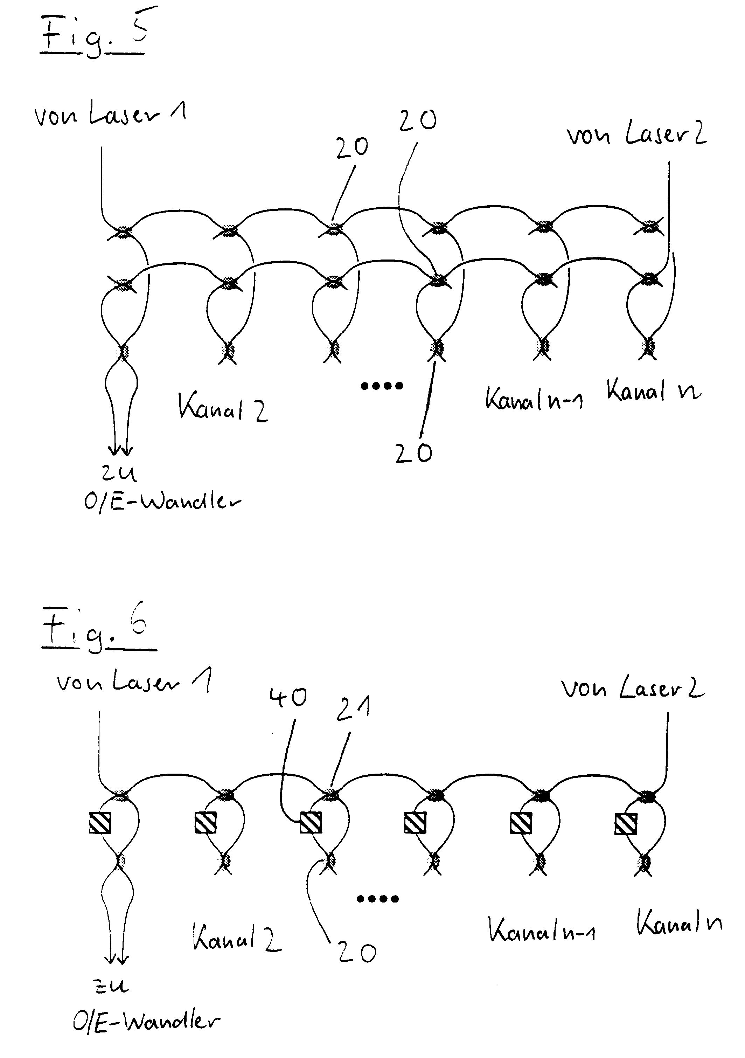

Eine weitere Ausführungsform für die Aufspaltung in einzelne Lichtwege mit Hilfe von Glasfasern zeigt Fig. 5. Es entspricht einer Anordnung nach Typ **A**. Wie in Fig. 2 ist auch hier der eindimensionale Fall der Schwenkung in nur einer Richtung dargestellt.

Das vom Laser 1 kommende Licht wird sukszessive durch die 2 · 2- Koppler **20** in der ersten Reihe verzweigt, ebenso das von Laser **2** kommende Licht durch die 2 · 2-Koppler **20** der zweiten Reihe. In den 2 · 2-Kopplern **20** der dritten Reihe wird jeweils Licht aus dem Netzwerk von Laser **1** und Licht aus dem Netzwerk von Laser **2** in eine gemeinsame Faser eingekoppelt und überlagert, so daß jeweils ein Schwebungssignal entsteht, welches über die O/E-Wandler zu den einzelnen Sende/Empfangselementen der Antennen (Kanäle 1 bis n) geführt wird. Die Lichtwege zwischen den einzelnen 2 · 2-Kopplern **20** sind überall gleich lang.

Maximale Signalintensität im Überlagerungssignal bei begrenzter Laserleistung erhält man nur, sofern jeder der 2 · 2-Koppler **20** mit einem individuellen Koppelverhältnis hergestellt wird, so daß alle Zweige die gleiche Lichtleistung erhalten.

Vom i-ten Koppler in der Strecke, von der Einspeisung eines Lasers aus gezählt, muß bei n Kanälen der (n+1-i) te Teil des Lichts "nach unten" ausgekoppelt werden. Durch eine Staffelung der Lichtwege zwischen den einzelnen 2 · 2-Kopplern **20** (aber auch durch die Strecke zwischen den 2 · 2-Kopplern **20** der dritten Reihe und den O/E-Wandlern) läßt sich eine Anordnung nach Typ **B** realisieren.

Der gezeigte Aufbau ist vor allem dann vorteilhaft, wenn die beteiligten Koppler eine ausreichend niedrige Einfügungsdämpfung besitzen.

Für eine Kanalanzahl kleiner oder gleich zwei ist dieser Aufbau äquivalent zum Aufbau mit Sternkopplern.

Es können auch hierarchische Kombinationen von Sternkopplern und 2 · 2-Kopplern innerhalb einer Anordnung verwendet werden. Möglich ist z.B.eine Aufteilung auf die einzelnen Elevationsgruppen mit einem Sternkoppler, wie in Fig. 4 gezeigt, für den Elevationsschwenk, und daran an schließend für den Azimutschwenk eine Aufteilung auf die einzelnen Elemente der Elevationsgruppen mit einer Anordnung aus 2 2-Kopplern nach Fig. 5 oder 6.

Anstatt einer Anordnung nach Fig. 5, in der das Licht der beiden Laser in getrennte Netzwerke eingespeist wird, ist es auch möglich, ein einzelnes Netzwerk zu verwenden, welches von beiden Lasern gespeist wird. Damit läßt sich die Zahl der Koppler wesentlich vermindern. Man benötigt dann anstatt der zwei in Fig. 5 gezeigten Reihen von 2 2-Kopplern für die Aufspaltung des von Laser **1**, Laser **2** ausgehenden Lichts nur noch eine solche Reihe. Für Aufbauten mit wenigen Kanälen (Sende/Empfang-Elemente), oder solchen, die keine hohe Lichtausbeute erfordern, genügt es, entlang dieser einen Reihe Koppler mit dem Auskoppelverhältnis 2/(n+1) zu verwenden. Die optischen Überlagerungssignale enthalten dann allerdings einen hohen Gleichanteil.

Maximale Amplitude der Schwebungssignale sind damit nur erreichbar, sofern die Koppelverhältnisse für das Licht der beiden Laser innerhalb eines Kopplers unterschiedlich gewählt werden kann. Das ist nur möglich, sofern das Licht (über die geringfügig verschobene optische Frequenz) in unterschiedlichen Moden schwingt. Es kommen hier die beiden Polarisationsrichtungen in Frage und die Koppler müssen dann polarisationsabhängige Eigenschaften besitzen.

Ein solches Netzwerk ist in Fig. 6 abgebildet. Das Netzwerk wird von beiden Lasern gespeist, wobei die Polarisationsebene der von den Lasern kommenden Lichts um 90° verdreht ist. Lichtvon Laser **1** z.B. ist horizontal polarisiert, entsprechend ist das von Laser **2** ausgehende Licht vertikal polarisiert. Zwischen den Einkoppelpunkten von Laser **1** und Laser **2** befinden sich (erste Reihe) polarisationsabhängige 2 · 2-Koppler **21**, die das Licht beider Laser verzweigen, bevor das Licht in den nachfolgenden herkömmlichen 2 · 2-Kopplern **20** (zweite Reihe) zum Schwebungssignal überlagert wird. Dazu ist es aber notwendig, daß beide zu überlagernden Lichtanteile in derselben Polarisationsebene schwingen. Es werden deshalb unmittelbarvor der Überlagerung optische Elemente geschaltet, die die Polarisationsebene eines der zu überlagernden Lichtanteile um 90° drehen. Anstatt der Elemente (oder auch zusätzlich), die die Polarisationsebene um 90° drehen, sind auch Elemente mit einstellbarem Polarisationsdrehwinkel, die z.B. auf dem Faraday-Effekt beruhen, einsetzbar. Mit diesen variablen Elementen läßt sich die Amplitude des Überlagerungssignals einstellen.

Die hohen optischen Frequenzen stellen besondere Anforderungen an die Verzögerungsleitungen hinsichtlich ihrer Länge. Es ist nicht nötig, die Leitungen in ihrer Länge auf Bruchteile einer Wellenlänge genau anzufertigen. Vordem eigentlichen Betrieb des Instrumentes sind Kalibrationszyklen erforderlich, die dem Einstellen der individuellen Phase eines jeden Sende/Empfangsmoduls dienen. Zwischen den Kalibrationszyklen darf sich die Änderung der Verzögerungslängen nur noch innerhalb enger Toleranzen auf die Phasenbelegung der Antenne auswirken.

Eine typische Anordnung diene als Beispiel. Bei 1 m Glasfaserlänge, 1 mm Wellenlänge und 6° zugelassenem Phasenfehler muß die relative Laufzeitstabilität $10^{-8}$ betragen. Bei üblichen Temperaturkoeffizienten von ca. ($10^{-5}$/K) der Fasern bedeutet dies eine Temperaturstabilität für die Verzögerungsleitungen von $10^{-3}$ K.

Gleiche Änderungen der Phasenlaufzeit auf allen Verzögerungsleitungen bewirken einen Schwenk der Hauptkeule. Da die absolute Lage der Laserfrequenzen $\nu_1$, $\nu_2$ ohnehin nicht gestellt werden kann, sondern eine Regelung sie entsprechend der gewünschten Steigung des Phasenganges nachregelt, werden diese gleichmäßigen Änderungen mit ausgeregelt. Somit bleiben nur noch die Änderungen der Unterschiede zwischen den Verzögerungsleitungen, die auf den oben genannten Wert gesenkt werden müssen.

Erreicht wird dies durch ein enges mechanisches und thermisches Koppeln aller Fasern und Koppelelemente untereinander. Äußere Einflüsse akustischer, thermischer oder anderer Ursache wirken so in erster Näherung auf alle Elemente in gleichem Maße und werden somit unterdrückt, sofern ihre Frequenz innerhalb der Regelungsbandbreite liegt. Einflüsse niedriger Ordnung (z. B. lineare Temperaturgradienten) werden durch ein geeignetes "Mischen" der Fasern im Raum kompensiert. Ein Verdrillen der Fasern untereinander reicht untergewissen Umständen aus.

## Patentansprüche

1. Verfahren zur Ansteuerung einer aktiven Antenne, die eine Anzahl p von Sende/Empfangs-Elementen umfaßt, **dadurch gekennzeichnet**, daß

   - das Licht einer ersten kohärenten Lichtquelle (Laser 1) in p Lichtwege unterschiedlicher Länge aufgeteilt wird,
   - das Licht einer zweiten kohärenten Lichtquelle (Laser 2) in p Lichtwege gleicher oder unterschiedlicher Länge aufgeteilt wird,
   - die Längendifferenzen zwischen den einzelnen Lichtwegen viel größer als die Wellenlängen der beiden Lichtquellen (Laser 1, Laser 2) sind,
   - das Licht auf einem Lichtweg, der von der ersten Lichtquelle (Laser 1) ausgeht, mit dem Licht auf einem Lichtweg, der von der zweiten Lichtquelle (Laser 2) ausgeht, kohärent überlagert wird, so daß p optische Überlagerungssignale entstehen
   - die optischen Überlagerungssignale in elektrische Signale gewandelt werden, die an die einzelnen Sende/Empfangs-Elemente geführt werden,
   - durch Änderung der Frequenzen der kohärenten Lichtquellen (Laser 1, Laser 2) die Antennenkeulen geformt und in mindestens einer Richtung geschwenkt werden und/oder die Frequenz der elektrischen Signale, die an den Sende/Empfangs-Elementen anliegen, verändert wird.

2. Verfahren nach Anspruch 1, **dadurch gekennzeichnet**, daß die Sende/Empfangselemente in Zeilen, die Elevationsgruppen bilden, und Spalten, die Azimutgruppen bilden, angeordnet werden.

3. Verfahren nach Anspruch 1 oder 2, **dadurch gekennzeichnet**, daß für die Länge $l_{i,j,k}$ eines von Lichtquelle **i**, i=1,2 ausgehenden und dem Sende/Empfangselement in Elevationsgruppe **j**, j=1 bis n; mit n Anzahl der Elevationsgruppen und Azimutgruppe **k**, k=1 bis m; mit m Anzahl der Azimutgruppen zugeordneten optischen Wegs gilt:

$$(l_{1,j,k} - l_{2,j,k}) - (l_{1,j+1,k} - l_{2,j+1,k}) = L_{el}, \text{ konstant für alle j,k}$$

$$(l_{1,j,k} - l_{2,j,k}) - (l_{1,j,k+1} - l_{2,j,k+1}) = L_{az}, \text{ konstant für alle j,k}.$$

4. Verfahren nach Anspruch 3, **dadurch gekennzeichnet**, daß $L_{el} \geq 1m$ und $L_{az} \leq L_{el}/m \cdot$ (Azimutschwenkauflösung/minimale Azimutkeulenbreite) ist.

5. Verfahren nach einem der vorangehenden Ansprüche, **dadurch gekennzeichnet**, daß das Licht in Lichtleitfasern geführt wird und die Aufteilung in einzelne Lichtwege durch Sternkoppler **(10)** und/oder 2.2-Koppler **(20)** vorgenommen wird.

6. Verfahren nach einem der vorangehenden Ansprüche, **dadurch gekennzeichnet**, daß das Licht über freie Wegstrecken geführt wird und die Aufteilung in einzelne Lichtwege durch halbdurchlässige Spiegel und/oder optische Gitter und/oder Hologramme vorgenommen wird.

7. Verfahren nach einem der Ansprüche 1 bis 5, **dadurch gekennzeichnet**, daß das Licht der beiden Lichtquellen (Laser 1, Laser 2), welches unterschiedlich polarisiert ist, entgegengesetzt in eine Lichtleitfaser, die 2 · 2-Koppler **(21)** mit polarisationsabhängigem Auskoppelverhältnis enthält, eingekoppelt wird.

8. Verfahren nach einem der vorangehenden Ansprüche, **dadurch gekenzeichnet,** daß statt der zweiten Lichtquelle ein trägerunterdrückter, mit beliebigen Signalen einseitenbandmodulierter Teil des Lichts der ersten Lichtquelle verwendet wird.

9. Verfahren nach einem der vorangehenden Ansprüche, **dadurch gekennzeichnet**, daß mehrere Lichtquellenpaare gleichzeitig oder zeitlich nacheinander in das Netzwerk zur unabhängigen Strahlschwenkung mit unterschiedlichem Informationsgehalt eingekoppelt werden.

10. Verfahren nach einem der vorangehenden Ansprüche, **dadurch gekennzeichne**t, daß innerhalb der Lichtwege zusätzliche optische Stellglieder **(30)** zur Regelung von Phase und Amplitude des Schwebungssignals angeordnet sind, die aus Phasenstellgliedern und/oder Polarisationsstellgliedern und/oder Interferometern besteht können.

11. Verfahren nach einem der vorangehenden Ansprüche, **dadurch gekennzeichnet**, daß als Lichtquellen Laserdioden verwendet werden.

## Claims

1. Process for controlling an active aerial, which comprises a number p of transmit/receive elements, characterised in that

   - the light of a first coherent light source (laser 1) is separated into p optical paths of different lengths,
   - the light of a second coherent light source (laser 2) is separated into p optical paths of the same or different lengths,
   - the differences in length between the individual optical paths are far greater than the wavelengths of the two light sources (laser 1, laser 2),
   - the light on an optical path which originates from the first light source (laser 1) is coherently superimposed with the light on an optical path which originates from the second light source (laser 2), such that p optical superimposition signals result
   - the optical superimposition signals are converted into electrical signals, which are conducted to the individual transmit/receive elements
   - by alteration of the frequencies of the coherent light sources (laser 1, laser 2), the aerial lobes are formed and pivoted in at least one direction, and/or the frequency of the electrical signals which are applied to the transmit/receive elements is altered .

2. Process according to claim 1, characterised in that the transmit/receive elements are arranged in lines, which form elevation groups, and columns, which form azimuth groups.

3. Process according to claim 1 or 2, characterised in that, for the length $l_{i,j,k}$, of an optical path originating from light source $i$, $i=1,2$ and associated with the transmit/receive element in the elevation group $j$, $j=1$ to $n$; with $n$ representing the number of elevation groups, and azimuth group $k$, $k=1$ to $m$; with $m$ representing the number of azimuth groups, the following applies:

$$(l_{1,j,k}-l_{2,j,k})-(l_{1,j+1,k}-l_{2,j+1,k}) = L_{el}, \text{ constant for all } j,k,$$

$$(l_{1,j,k}-l_{2,j,k})-(l_{1,j,k+1}-l_{2,j,k+1}) = L_{az}, \text{ constant for all } j,k.$$

4. Process according to claim 3, characterised in that $L_{el} \geq 1m$ and $L_{az} \leq L_{el}/m \cdot$(azimuth scanning resolution/minimum azimuth lobe width).

5. Process according to any one of the preceding claims, characterised in that the light is conducted in light-conducting fibres and the separation into individual optical paths is performed using star couplers (10) and/or 2·2couplers (20).

6. Process according to any one of the preceding claims, characterised in that the light is conducted via free paths and the separation into individual optical paths is performed using semi-permeable mirrors and/or optical gratings and/or holograms.

7. Process according to any one of claims 1 to 5, characterised in that the light of the two light sources (laser 1, laser 2), which is differently polarised, is coupled in opposite directions into a light-conducting fibre, which contains 2·2-couplers (21) with a polarisationdependent output ratio.

8. Process according to any one of the preceding claims, characterised in that in place of the second light source, a portion of the light of the first light source is used, which portion is carrier-suppressed and is single sidebandmodulated with any desired signals.

9. Process according to any one of the preceding claims, characterised in that a plurality of light source pairs are coupled simultaneously or in succession into the network for independent beam scanning with different information content.

10. Process according to any one of the preceding claims, characterised in that additional optical setting elements (30) for regulating the phase and amplitude of the beat frequency signal are arranged in the optical paths, which additional optical setting elements may consist of phase-setting elements and/or polarisation setting elements and/or interferometers.

11. Process according to any one of the preceding claims, characterised in that laser diodes are used as light sources.

**Revendications**

1. - Procédé pour la commande d'une antenne active comprenant un nombre p d'éléments d'émission/réception, **caractérisé en ce** que

- la lumière émise par une première source de lumière cohérente (laser 1) est divisée en p chemins optiques de longueur différente,
- la lumière émise par une seconde source de lumière cohérente (laser 2) est divisée en p chemins optiques de longueur égale ou différente,
- les différences de longueur entre les différents chemins optiques sont beaucoup plus grandes que les longueurs d'ondes des deux sources de lumière (laser 1, laser 2),
- à la lumière parcourant l'un des chemins optiques à partir de la première source de lumière (laser 1) est superposée de manière cohérente la lumière parcourant un chemin optique à partir de la seconde source de lumière (laser 2), de façon à obtenir p signaux de recouvrement optiques,
- les signaux de recouvrement optiques sont transformés en signaux électriques qui sont transmis aux différents éléments d'émission/réception,
- la variation des fréquences des sources de lumière cohérente (laser 1, laser 2) permet de former les lobes de rayonnement d'antenne et de les faire pivoter dans au moins une direction et/ou de varier la fréquence des signaux électriques appliqués aux éléments d'émission/réception.

2. Procédé selon la revendication 1, caractérisé en ce que les éléments d'émission/réception sont disposés en lignes qui forment des groupes d'élévation et en colonnes qui forment des groupes d'azimut.

3. Procédé selon l'une des revendications 1 ou 2, caractérisé en ce que la longueur $l_{i,j,k}$ d'un chemin optique partant de la source de lumière i, i=1,2 et associé à l'élément d'émission/réception dans le groupe d'élévation j, j=1 à n, où n est le nombre des groupes d'élévation, et dans le groupe d'azimut k, k=1 à m, où m est le nombre des groupes d'azimut, est définie par

$$(l_{1,j,k} - l_{2,j,k}) - (l_{1,j+1,k} - l_{2,j+1,k}) = L_{el}, \text{ constant pour tous les j,k}$$

$$(l_{1,j,k} - l_{2,j,k}) - (l_{1,j,k+1} - l_{2,j,k+1}) = L_{az}, \text{ constant pour tous les j,k.}$$

4. Procédé selon la revendication 3, caractérisé en ce que $L_{el} \geq 1m$ et $L_{az} \leq L_{el}/m \cdot$ (résolution du pivotement azimutal / largeur minimale du lobe azimutal).

5. Procédé selon l'une des revendications précédentes, caractérisé en ce que la lumière est transmise dans des fibres optiques et que la division en différents chemins optiques est effectuée au moyen de coupleurs en étoile (10) et/ou de coupleurs 2 · 2 (20).

6. Procédé selon l'une des revendications précédentes, caractérisé en ce que la lumière est transmise sur des parcours libres et que la division en différents chemins optiques est effectuée au moyen de miroirs semitransparents et/ou de réseaux optiques et/ou d'hologrammes.

7. Procédé selon l'une des revendications 1 à 5, caractérisé en ce que la lumière émise par les deux sources de lumière (laser 1, laser 2) et polarisée différemment est injectée en sens opposé dans une fibre optique qui comprend des coupleurs 2 · 2 (21) avec un rapport de découplage qui dépend de la polarisation.

8. Procédé selon l'une des revendications précédentes, caractérisé en ce qu'il utilise à la place de la seconde source lumière, une partie de la lumière issue de la première source de lumière, avec suppression de la fréquence porteuse et modulation à bande latérale unique par des signaux quelconques.

9. Procédé selon l'une des revendications précédentes, caractérisé en ce que plusieurs paires de sources de lumière sont couplées simultanément ou successivement avec le réseau pour permettre un pivotement indépendant des faisceaux avec des contenus variables de l'information.

10. Procédé selon l'une des revendications précédentes, caractérisé en ce qu'à l'intérieur des chemins optiques sont disposés des composants de réglage optiques (30) supplémentaires pour le réglage de la phase et de l'amplitude du signal de battement, qui peuvent être constitués par des composants de réglage de phase et/ou des composants de réglage de polarisation et/ou des interféromètres.

11. Procédé selon l'une des revendications précédentes, caractérisé en ce qu'il utilise comme sources de lumière, des diodes laser.

# Fig. 1

a)

Signaleinspeisung

Abgriffe i = 1-7

b)

Signaleinspeisung

Abgriffe i = 1-7

c)

Signaleinspeisung

Abgriffe i = 1-7

Fig. 2

a)

Kanal n

10

von
Laser 1

Kanal 1

10

von
Laser 2

20

zu O/E-Wandler

b)

Kanal n

10

von
Laser 1

Kanal 1

10

von
Laser 2

20

zu O/E-Wandler

Fig 3

Typ A | Typ B

Keulenschwenken:

Überlagerungsfrequenz ändern:

# Fig. 4

## Fig. 5

von Laser 1

20  20  von Laser 2

Kanal 2  ••••  Kanal n-1  Kanal n

20

zu
O/E-Wandler

## Fig. 6

von Laser 1

40  21  von Laser 2

Kanal 2  ••••  Kanal n-1  Kanal n

20

zu
O/E-Wandler